# EUROPEAN PATENT SPECIFICATION

(11) **EP 4 416 621 B1**
(45) Date of publication and mention of the grant of the patent: **06.05.2026**
(21) Application number: 22789382.3
(22) Date of filing: 19.09.2022
(51) Int. Cl.: G06F 21/35, G06F 21/44

(54) **CHIP AUTHENTICATION**
CHIP-AUTHENTIFIZIERUNG
AUTHENTIFICATION DE PUCE

(30) Priority: 15.10.2021 GB 202114805
(43) Date of publication of application: 21.08.2024
(73) Proprietor: Mastercard International Incorporated, Purchase, NY 10577 (US)
(72) Inventor: MUSHING, Alan, Wincham Cheshire, CW9 6PX (GB); FERNANDES DE OLIVEIRA, Matheus, Altrincham WA14 4RB (GB)
(74) Representative: Keltie LLP
(86) International application number: PCT/US2022/043983
(87) International publication number: WO 2023/064063

(56) References cited:
- EP-A1- 2 733 654
- EP-A1- 2 940 642
- WO-A1-2021/133501

## Description

### CROSS REFERENCE TO RELATED APPLICATION

This application claims the benefit of United Kingdom Patent Application No. 2114805.1, which was filed on October 15, 2021.

### TECHNICAL FIELD

The present disclosure relates to chip authentication. In particular, the present disclosure relates to computer-implemented methods and associated computing devices for authenticating a chip comprised within a user device. More specifically, the present disclosure relates to computer-implemented methods and corresponding computing devices for authenticating a chip comprised within a user device in a non-payment transaction setting. The present disclosure further relates to use of computing devices for authenticating a chip comprised within a user device in a non-payment transaction setting.

### BACKGROUND

A payment card, which is a particular example of a transaction device, typically contains secure information in a chip to support performance of a transaction. In order to initiate a payment transaction, a payment card can interact with a merchant's point-of-sale (POS) terminal by inserting the payment card into the POS terminal device and reading the payment data from the chip, or by swiping the payment card at the POS terminal device and reading the payment data from the magnetic stripe. Alternatively, the payment data can be manually entered at the POS terminal. As a further alternative, payment data can be read from the payment card in a contactless manner, namely by bringing the payment card into close proximity with a contactless reader at the merchant's POS terminal device.

A problem with such transaction devices is that they are subject to cloning and misuse. For example, a fraudster may attempt to clone a genuine payment card by removing the genuine chip from the genuine card and producing a fraudulent card which includes the genuine chip and a newly-manufactured card body. The resulting fraudulent payment card could then be used to carry out a fraudulent payment transaction. In some cases, the genuine chip could be replaced by a fake chip in the genuine card body to trick the cardholder into believing that the payment card as a whole is genuine. Therefore, transaction devices such as payment cards are vulnerable to copying, misuse and fraudulent behaviour.

Holograms are often used in payment cards as a security feature. However, holograms only provide an indication that the card body is genuine, but they provide no indication of whether or not the chip is genuine. The use of holograms therefore has its limitations. In particular, holograms are not chip-specific. In addition, checking their authenticity requires dedicated equipment. As discussed above, a fraudster could therefore replace the genuine chip of the genuine payment card with a fake chip and the hologram would indicate to the cardholder that the card body is genuine and thereby provide the impression that the payment card as a whole is genuine, when in fact the genuine chip has been replaced with a fake chip. Detection of fraud in such cases is likely to be significantly delayed.

Existing techniques for authenticating a payment card to detect counterfeit chips have to be performed during a payment transaction. The existing chip authentication methods are mostly used by payment terminals and card issuers and are based on public key cryptography. A private key is embedded in the payment card, and the corresponding public key is certified by a chain.

However, these existing techniques depend on card issuers to personalise the payment cards with cryptographic keys and certificates that support the authentication and allow an off-card entity (e.g., a payment terminal) to verify the chip authenticity. Issuers may be disincentivised to personalise their cards with support for authentication due to the costs, performance impact and complexity it brings to the payment infrastructure (card, terminals and personalisation process). In these cases, the possibility of identifying counterfeit chips, especially by law enforcement agencies, becomes very limited.

The present disclosure has been devised to mitigate or overcome at least some of the above-mentioned problems.

WO 2021/133501 A1 is relevant prior art.

### SUMMARY OF THE DISCLOSURE

In accordance with a first aspect, there is provided a computer-implemented method for authenticating a chip comprised within a user device in a non-payment transaction setting, wherein the method is performed at the chip, the method comprising: storing chip input data; receiving, from a terminal device, an authentication command comprising an authentication code; computing, upon receipt of the authentication command, a user device cryptographic hash comprising the chip input data and the received authentication code; computing a user device cryptographic signature comprising the user device cryptographic hash; sending, to the terminal device, the chip input data, such that the terminal device can compute a terminal device cryptographic hash of the chip input data and the authentication code; and sending, to the terminal device, the user device cryptographic signature to be verified at the terminal device, such that the user device cryptographic hash can be retrieved from the user device cryptographic signature for comparison with the terminal device cryptographic hash to authenticate the chip in a non-payment transaction setting.

The present disclosure thereby provides a method of detecting whether a chip in a user device is genuine or counterfeit, outside of a payment transaction.

Contrary to the existing methods, the present disclosure does not need to take place as part of a payment transaction. The present disclosure can be performed even if a transaction is rejected or blocked by the card. The present disclosure thereby allows any off-card entity, including law enforcement agencies, to verify the authenticity of a payment card, specifically the chip, in a non-payment transaction setting.

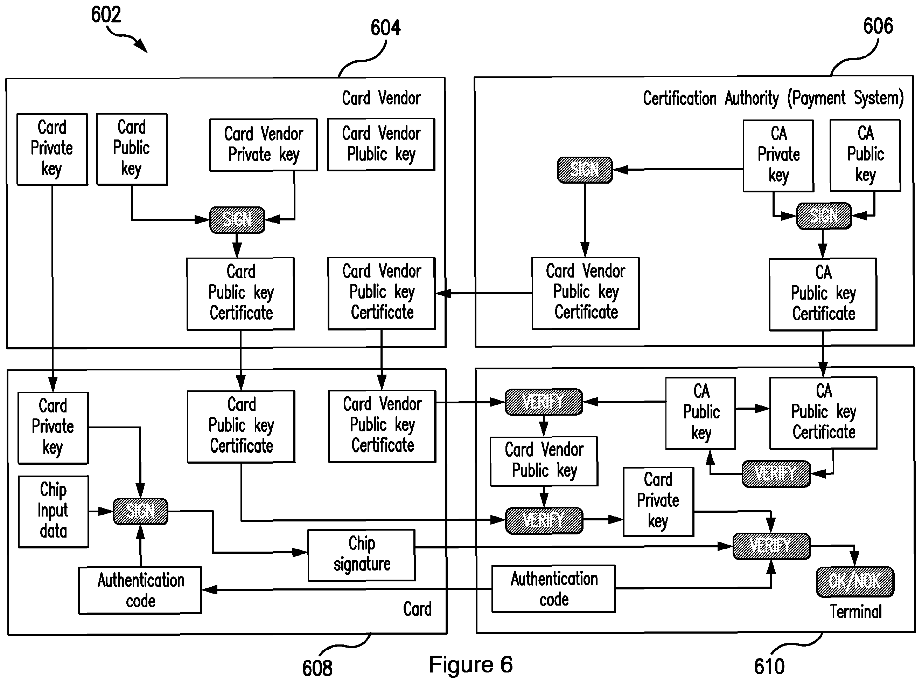

In order to support the card authentication, the present disclosure may use pre-existing cryptographic keys embedded in the chip to support payment functionality. Alternatively, the chip may be embedded with a standalone cryptographic infrastructure maintained by the payment system. An exemplary standalone cryptographic infrastructure is shown in Figure 6.

Advantageously, the present disclosure operates using cryptographic functionality already present in modern payment cards and terminals, and it can be easily extended to mobile devices, Secure Elements and servers for digital signature generation and verification.

Furthermore, the present disclosure offers contactless chip functionality as an enhanced alternative to holograms. It provides a chip-specific mechanism using strong cryptography as a way to demonstrate the chip authenticity.

The user device cryptographic signature may be computed using a user device private key, such that the user device cryptographic hash can be retrieved from the user device cryptographic signature using a user device public key.

The user device cryptographic signature may be computed using a user device secret key, such that the user device cryptographic hash can be retrieved from the user device cryptographic signature using the user device secret key.

The user device public key may be verified prior to computing the user device cryptographic signature.

The terminal device may connect to an external Web service to perform verification of the user device cryptographic signature.

The user device may be a transaction device.

The transaction device may comprise a card form factor.

The card form factor may be a payment card form factor.

The payment card form factor may be in accordance with ISO/IEC 7810 ID-1.

The transaction device may comprise a non-card form factor.

The chip input data may comprise an authentication sequence counter.

The chip input data may comprise: a signed data format, a hash algorithm identifier, an application transaction counter, and/or a pad pattern.

The method may comprise incrementing the authentication sequence counter each time the authentication command is received.

In accordance with a second aspect, there is provided a computer-implemented method for authenticating a chip comprised within a user device in a non-payment transaction setting, wherein the method is performed at a terminal device, the method comprising: storing an authentication code; sending, to the chip, an authentication command comprising the authentication code; receiving, from the chip, chip input data; computing a terminal device cryptographic hash of the chip input data and the authentication code; and receiving, from the chip, a user device cryptographic signature comprising a user device cryptographic hash of the chip input data and the authentication code, the user device cryptographic hash and the user device cryptographic signature having been computed by the chip upon receipt of the authentication command, retrieving the user device cryptographic hash from the user device cryptographic signature; comparing the user device cryptographic hash with the terminal device cryptographic hash; determining that the chip comprised within the user device is authentic in a non-payment transaction setting if the user device cryptographic hash is equal to the terminal device cryptographic hash.

The method may comprise: computing a terminal device cryptographic hash of the chip input data, the authentication code and arbitrary data; sending the arbitrary data to the chip for inclusion in the user device cryptographic signature generated by the chip; receiving, from the chip, a user device cryptographic signature comprising a user device cryptographic hash of the chip input data, the arbitrary data and the authentication code, the user device cryptographic hash and the user device cryptographic signature having been computed by the chip upon receipt of the authentication command; retrieving the user device cryptographic hash from the user device cryptographic signature; comparing the user device cryptographic hash with the terminal device cryptographic hash; determining that the chip comprised within the user device is authentic in a non-payment transaction setting if the user device cryptographic hash is equal to the terminal device cryptographic hash.

Advantageously, the present disclosure can be used to authenticate arbitrary data sent to the cardholder, which allows it to provide an extra authentication factor for the cardholder in certain use cases. This can be used during online authentication process, for instance. For those use cases, the present disclosure can increase the security level by including some sort of access control (cardholder authentication), such as a PIN, passcode or biometric authentication.

The terminal device may comprise a card reader in a non-payment transaction setting.

The terminal device may comprise a smartphone.

The user device and the terminal device may interact in a contactless manner.

The user device and the terminal device may interact via NFC technology.

The user device and the terminal device may interact in a contact-based manner.

In accordance with a third aspect, there is provided a computing device comprising a processor, a memory, and communication capability, wherein the computing device is adapted to perform the method of the first aspect.

In accordance with a fourth aspect, there is provided a computing device comprising a processor, a memory, and communication capability, wherein the computing device is adapted to perform the method of the second aspect.

In accordance with a fifth aspect, there is provided a computer program product comprising instructions which, when the program is executed by a computer, cause the computer to carry out the method of the first aspect.

In accordance with a sixth aspect, there is provided a computer program product comprising instructions which, when the program is executed by a computer, cause the computer to carry out the method of the second aspect.

In accordance with a seventh aspect, there is provided a computer-readable storage medium comprising instructions which, when executed by a computer, cause the computer to carry out the method of the first aspect.

In accordance with an eighth aspect, there is provided a computer-readable storage medium comprising instructions which, when executed by a computer, cause the computer to carry out the method of the second aspect.

In accordance with a ninth aspect, there is provided a use of the computing device of the third aspect for authenticating a chip in a non-payment transaction setting.

In accordance with a tenth aspect, there is provided a use of the computing device of the fourth aspect for authenticating a chip in a non-payment transaction setting.

Within the scope of this application, it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner. The scope of the invention is defined by the independent claims.

### BRIEF DESCRIPTION OF THE DRAWINGS

One or more embodiments of the disclosure will now be described, by way of example only, with reference to the accompanying drawings, in which:
Figure 1 is a schematic diagram showing the interaction between a payment card, which is an example of a user device, and a terminal device, in accordance with an embodiment of the present disclosure;
Figure 2 is a sequence diagram showing the interaction between the payment card, which comprises a chip, and the terminal device in further detail, in accordance with an embodiment of the present disclosure; and
Figure 3 is a table showing the data used by the payment card to compute a cryptographic signature, in accordance with an embodiment of the present disclosure;
Figure 4 is a flow diagram showing a computer-implemented method for authenticating a chip comprised within a user device in a non-payment transaction setting, wherein the method is performed at the chip, in accordance with embodiments of the present disclosure;
Figure 5 is a flow diagram showing a computer-implemented method for authenticating a chip comprised within a user device in a non-payment transaction setting, wherein the method is performed at a terminal device, in accordance with embodiments of the present disclosure; and
Figure 6 is a block diagram showing an exemplary standalone cryptographic infrastructure.

### DETAILED DESCRIPTION

The present disclosure relates to computer-implemented methods for authenticating a chip comprised within a user device in a non-payment transaction setting.

Aspects of the present disclosure include computing devices adapted to perform the methods as outlined in any of the disclosed embodiments. Further aspects of the disclosure include computer program products and computer-readable storage media comprising instructions which cause a computer to perform each of the methods as outlined in any of the disclosed embodiments.

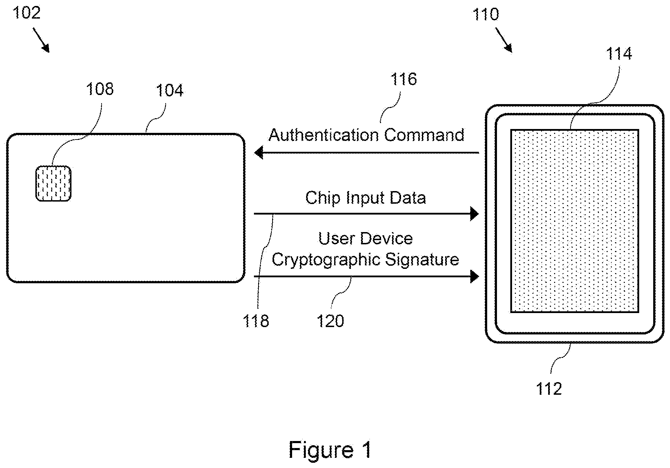

General and specific embodiments of the disclosure will be described below with reference to Figures 1 to 6.

The present disclosure provides a computer-implemented method for authenticating a chip comprised within a user device in a non-payment transaction setting, wherein the method is performed at the chip. The present disclosure also provides a computer-implemented method for authenticating a chip comprised within a user device in a non-payment transaction setting, wherein the method is performed at a terminal device. A chip may be defined as a physical electronic device that controls electric signals and may comprise memory devices and microprocessors that store data and enable the interaction with an external device. For example, the chip may be an integrated circuit chip comprising a set of electronic circuits.

Applications of the present disclosure provide ways of detecting fraud by determining whether the chip is genuine. The present disclosure enables an indication of whether the chip is genuine in a non-payment transaction setting and thereby significantly improves detection of fraud in such cases.

An exemplary use case of the present disclosure is provided as follows. A payment card that is suspect of being fraudulent may be reported to a law enforcement agency. Using the methods performed by the user device and the terminal device of the present disclosure, the law enforcement agency is able to verify the authenticity of the payment card, specifically the chip, in a non-payment transaction setting.

Figure 1 shows a payment card 102 comprising a card body 104 and a chip 108. The payment card 102 is as an example of a user device. The card body 104 provides a chip enclosure for the chip 108. The chip 108 comprises a processor and memory device (not shown). The chip 108 may be an EMV chip, thereby associated with the EMV chip specifications. The EMV chip provides the ability to store confidential information securely, perform processing functions and perform cryptographic processing.

The payment card 102 is capable of performing contactless transactions via NFC technology as well as contact-based transactions using EMV. The payment card 102 is equipped with a local wireless telecommunications apparatus comprising a local transmitter/receiver in contact with the chip for communication with a local terminal device 110. In the present embodiment, the local transmitter/receiver comprises an NFC receiver to enable the payment card 102 to receive data from the terminal device 110, and an NFC transmitter for transmitting data from the payment card 102 to the terminal device 110. The transmitter/receiver comprises an antenna coil (not shown) for securing a connection with a contactless terminal device 110 in close proximity using magnetic induction. The payment card 102 is therefore capable of performing both contact-based transactions, e.g. via the chip 108, and contactless transactions, e.g. via NFC capability.

The payment card 102 further comprises a primary account number, an expiration date, and a cardholder name (not shown). The payment card 102 further comprises, typically on the back face of the payment card 102, a magnetic stripe comprising one or more cardholder verification codes, a signature strip, a printed cardholder verification code and a hologram (not shown). The hologram provides an indication of whether the card body 104 is genuine. The payment card 102 also comprises a payment application, which is used to store, process and transmit payment card data electronically.

In addition, Figure 1 shows a terminal device 110 comprising a terminal device body 112 and a display unit 114. The terminal device 110 is in a non-payment transaction setting. A non-payment transaction setting can be defined as a setting in which payment transactions are not being performed. For example, the non-payment transaction setting may be in the setting of an authority, e.g. a law enforcement agency.

The terminal device 110 comprises a Wi-Fi connection for connection to the Internet. Additionally, the terminal device 110 comprises an NFC receiver to enable the terminal device 110 to receive data from the payment card 102, and an NFC transmitter for transmitting data from the terminal device 110 to the payment card 102. The transmitter/receiver comprises an antenna coil (not shown) for securing a connection with the payment card 102 in close proximity using magnetic induction. The terminal device 110 further comprises a processor and a memory device (not shown).

The interaction between the payment card 102 and the terminal device 110 is also shown briefly in Figure 1. As discussed above, the payment card 102 and the terminal device 110 interact with one another using NFC technology. The present methods involve the terminal device 110 sending an authentication command 116 to the payment card 102. The present methods also involve the payment card 102 sending chip input data 118 and a user device cryptographic signature 120 to the terminal device 110, such that the user device cryptographic signature 120 can be verified at the terminal device 110. The authentication command 116, the chip input data 118 and the user device cryptographic signature 120 are discussed in further detail below with respect to methods and devices of the present disclosure.

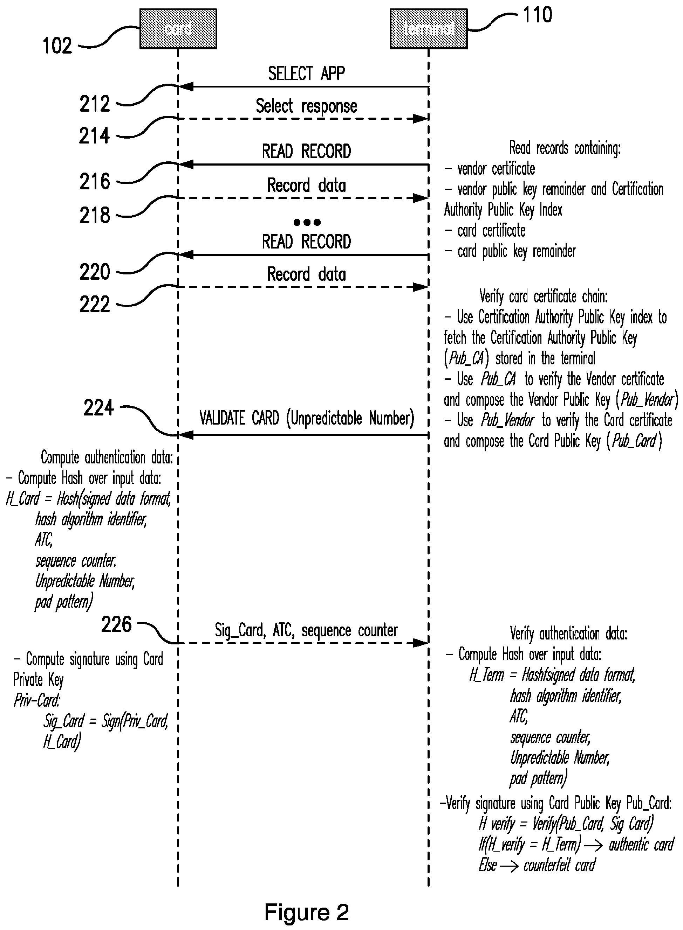

Turning to Figure 2, an exemplary computer-implemented method for authenticating a chip comprised within a user device in a non-payment transaction setting is shown. In the present embodiment, the user device comprises a payment card 102, and the interaction between the payment card 102 and the terminal device 110 is shown in further detail.

Prior to the steps shown in Figure 2 being performed, the payment card 102 undergoes a pre-personalisation stage. At the pre-personalisation stage, vendor certificates and card certificates are created and stored within the chip 108 in the payment card 102.

To begin pre-personalisation, the payment application on the payment card 102 is initialised using a private key unique to the payment application. The private key may be associated with any public key cryptography algorithm, such as Elliptic Curve Cryptography (ECC), RSA or a post-quantum algorithm. This private key is used to compute a verifiable digital signature. A certificate chain authenticates the public key that is used to verify the digital signature. The payment network, e.g. Mastercard, has a Certification Authority (CA) key pair that is the root to verify the authenticity of the certificate chain.

The entity responsible for the pre-personalisation stage also creates their key pair. This entity uses its private key to create card certificates over the unique payment application public key. The entity then contacts the CA (payment network) to have its public key certified under the CA key. The CA then creates a vendor certificate.

The vendor certificates may follow the format defined by EMVCo for Issuer certificates. The hash algorithm and the digital signature scheme may be those used for Issuer Certificates as defined by EMVCo.

The card certificates may follow the format defined for ICC certificates by EMVCo. The hash algorithm and the digital signature scheme may be those used for ICC Certificates as defined by EMVCo.

As a result of the pre-personalisation stage, the vendor certificate and the card certificate are created and stored on the payment card 102.

The chip 108 of the payment card 102 stores data comprising an authentication sequence counter. The authentication sequence counter is incremented, for example in persistent memory, each time the chip authentication command is received or processed. This provides a way to ensure that the generated signature is always different each time that the chip authentication command is executed, since the input data used to generate the signature is always changing. The authentication sequence counter may therefore be used to track the authentication process.

Optionally, the chip 108 of the payment card 102 stores data comprising: a signed data format; a hash algorithm identifier; an application transaction counter (ATC); and/or a pad pattern to implement padding. Padding is defined as appending bytes to a data block to create an input block with the size required by the cryptographic algorithm to operate correctly and securely. In the present embodiment, padding is implemented by introducing the pad pattern several times to reach the desired block size. Alternative methods of implementing padding may be used. The data stored within the chip 108 is to be used by the payment card 102 as chip input data to compute a hash function, as explained below.

The method of authenticating the chip will now be explained with reference to Figure 2. The first method step shown in Figure 2 is that the terminal device 110 sends, at Step 212, a 'SELECT APP' command to the payment card 102. The payment card 102 may host multiple applications. In order for an application to be executed, it is first selected via the 'SELECT APP' command. The selected application comprises the functionality to authenticate the chip. The payment card 102 then sends, at Step 214, a 'Select response' message in reply to the terminal device 110. The 'Select response' message indicates whether the 'SELECT APP' command was successfully executed.

Next, the terminal device 110 sends, at Step 216, a 'READ RECORD' command to the payment card 102 to read record data stored on the payment card 102. The payment card 102 has four records which make up the record data: Record 1, the vendor certificate; Record 2, the vendor public key remainder and Certification Authority Public Key Index; Record 3, the card certificate; and Record 4, the card public key remainder.

In response, the payment card 102 sends, at Step 218, a record to the terminal device 110. The step of reading records on the payment card 102 is repeated, as shown at Steps 220 and 222, until all four records of the record data have been read and received by the terminal device 110.

It should be noted that the steps of reading records on the payment card 102 in the present disclosure is different to that for a payment transaction. In comparison to a payment setting, the data that is read in the present disclosure is different to the data that would be read for a payment setting. For example, in the context of the present disclosure, the terminal device 110 reads records containing the information to validate the certification chain. In contrast, in the context of payment applications, depending on the card configuration, besides the certification chain, the terminal device also reads records containing information about the cardholder (e.g., name), about the account (e.g., account number), about the card (e.g., expiration date), about the Issuer configurations to be communicated to the terminal device during a payment transaction (e.g., type of cardholder verification methods supported, risk analysis configurations), amongst other data elements contained in records.

After the record data is received by the terminal device 110, the terminal device 110 performs a series of actions to verify the card certificate chain. In general, a digital certificate stores a public key, and by verifying the authenticity of the digital certificate, the public key stored within it can be confirmed as authentic. Firstly, the terminal device 110 uses the Certification Authority Public Key Index received from the payment card 102 to fetch the Certification Authority Public Key [*Pub_CA*] that is stored in the terminal device 110. Secondly, the terminal device 110 uses the Certification Authority Public Key [*Pub_CA*] to verify the vendor certificate received from the payment card 102, in order to verify that the Vendor Public Key [*Pub_Vendor]* stored within the vendor certificate is authentic, and then to compose the Vendor Public Key {*Pub_Vendor*]*.* Thirdly, the terminal device 110 uses the Vendor Public Key [*Pub_Vendor*] to verify the card certificate received from the payment card 102, in order to verify that the Card Public Key [*Pub_Card*] within the card certificate is authentic, and then to compose the Card Public Key [*Pub_Card].* Therefore, as a result of the verification of the card certificate chain, the vendor certificate and the card certificate are verified, the Vendor Public Key [*Pub_Vendor*] and the Card Public Key *[Pub_Card*] are verified as authentic, and in turn the Vendor Public Key [*Pub_Vendor*] and the Card Public Key [*Pub_Card*] are composed.

Next, the terminal device 110 sends, at Step 224, a 'VALIDATE CARD' command to the chip 108 of the payment card 102. The 'VALIDATE CARD' is equivalent to an authentication command. The 'VALIDATE CARD' command comprises an 8-byte unpredictable number, which has been created and is stored by the terminal device 110. The 8-byte unpredictable number is an example of an authentication code. The chip 108 receives the 'VALIDATE CARD' command comprising the unpredictable number. Upon receipt of the 'VALIDATE CARD' command, the chip 108 of the payment card 102 computes a payment card cryptographic hash [*H_Card*], which is an example of a user device cryptographic hash, comprising the chip input data that is stored in the chip 108 of the payment card 102 and the unpredictable number. As mentioned above, the chip input data comprises an authentication sequence counter. The unpredictable number and the authentication sequence counter enable adequate variation on input data for the signature generation to be achieved which, advantageously, enables replay attacks to be prevented. Optionally, the chip input data comprises: a signed data format; a hash algorithm identifier; an application transaction counter (ATC); and/or a pad pattern. The ATC helps to establish a link between the time when the chip authentication was performed, and the number of payment transactions performed so far with the payment card 102. Advantageously, the ATC can help during a forensic investigation to narrow down the time window in which a chip may have been cloned. For example, in a scenario in which the terminal device sends a first authentication command when the value of the ATC is 10 and a second authentication command when the value of the ATC is 20, where the first authentication command returns a valid response indicating that the chip is genuine, and the second authentication command returns an invalid response indicating that the chip is fake, then this provides a clear indication that the chip is likely to have been cloned during the transactions having an ATC value between 10 and 20. In turn, this can also help to pinpoint the merchant location at which the cloning of the chip may have occurred. The signed data format, hash algorithm identifier, and pad pattern are informative elements or elements that conform to the expected format of the data structure. For example, the hash algorithm identifier indicates which kind of hash algorithm was used.

It should be noted that the authentication command is not present in a typical payment setting. In order for a signature to be generated in a payment setting, the payment application would have to support an offline card authentication method. Issuers may be disincentivised to personalise their cards with support for offline card authentication due to the additional cost, performance impact and complexity it brings to the payment infrastructure (card, terminals and personalisation process). In these cases, the possibility of identifying counterfeit chips, especially by law enforcement agencies, becomes very limited. The authentication command removes this conditional aspect by being available to use regardless of whether or not offline card authentication is supported.

After the payment card cryptographic hash [*H _Card*] has been computed, the chip 108 of the payment card 102 then computes a payment card cryptographic signature [*Sig_Card*]*,* which is an example of a user device cryptographic signature, comprising the payment card cryptographic hash [*H_Card*]*.* The chip 108 of the payment card 102 uses a Card Private Key [*Priv_Card*] to compute the payment card cryptographic signature [*Sig_Card*]*.* The authentication sequence counter is incremented, for example in persistent memory, each time the authentication command is received or processed. The authentication sequence counter may therefore be used to track the authentication process. It should be noted that the Application Transaction Counter (ATC) is not incremented each time the authentication command is received or processed. The digital signature scheme used may be as defined in EMV Book 2.

It should be noted that the authentication sequence counter is a novel concept in the form of a new data element which is stored in the chip 108 for the purpose of the chip authentication command. The authentication sequence counter is monotonically incremented each time the chip authentication command is received or executed as a way to ensure that the generated signature is always different each time that the chip authentication command is executed, since the input data used to generate the signature is always changing. It is important that the signature is always changing, because otherwise a counterfeit chip could try to impersonate a legitimate chip by replaying the signature generated by a legitimate chip. The unpredictable number is also expected to cause variation in the signature input, however because it is provided by the terminal, it can be repeated by a malicious terminal or a terminal with wrong or corrupted implementation. Therefore, even if this happens, the authentication sequence counter is controlled by the card, and it would ensure that the signature input is changing.

Once the payment card cryptographic signature [*Sig*_*Card*] has been computed, the payment card 102 sends, at Step 226, the payment card cryptographic signature [*Sig*_*Card]* to the terminal device 110 to be verified at the terminal device 110. The payment card 102 also sends, at Step 226, the authentication sequence counter to the terminal device 110. Optionally, the payment card 102 also sends, at Step 226, the ATC to the terminal device 110.

The terminal device 110 receives the payment card cryptographic signature [*Sig_Card*] from the chip 108 of the payment card 102. The terminal device 110 also receives the authentication sequence counter, and optionally the ATC, from the chip 108 of the payment card 102. The terminal device 110 then computes a terminal device cryptographic hash [*H_Term*] of the chip input data and the unpredictable number. As mentioned above, the chip input data used to compute the cryptographic hash comprises an authentication sequence counter. Optionally, the chip input data comprises: a signed data format; a hash algorithm identifier; an application transaction counter (ATC); and/or a pad pattern. The ATC and the authentication sequence counter are variable entities and are known by the payment card 102 but not the terminal device 110. Therefore, in embodiments in which the ATC forms part of the chip input data, the ATC is provided to the terminal device 110 by the payment card 102. The remaining elements of the chip input data are fixed and known by the terminal device 110. Therefore, in embodiments in which any of the remaining elements (a signed data format; a hash algorithm identifier; and/or a pad pattern) form part of the chip input data, the terminal device 110 can compute the cryptographic hash [*H_Term*] without having to obtain these elements from the payment card 102.

The terminal device 110 at this stage is equipped to verify the payment card cryptographic signature [*Sig_Card*] using the Card Public Key [*Pub_Card*] that was computed by the terminal device 110 between Steps 222 and 224. In order to verify the payment card cryptographic signature [*Sig*_*Card*]*,* the terminal device 110 retrieves the payment card cryptographic hash *[H*_*verify]* from the payment card cryptographic signature [*Sig*_*Card]* using the Card Public Key [*Pub_Card*]*.* The terminal device 110 then compares the retrieved payment card cryptographic signature *[H_verify]* with the terminal device cryptographic hash *[H_Term] to* authenticate the chip in a non-payment transaction setting.

If the retrieved payment card cryptographic hash [*H_verify*] is equal to the terminal device cryptographic hash *[H_Term],* then the terminal device 110 determines that the chip 108 of the payment card 102 is an authentic chip. If, however, the retrieved payment card cryptographic hash [*H_verify*] is not equal to the terminal device cryptographic hash [*H_Term*]*,* then the terminal device 110 determines that the chip 108 of the payment card 102 is a counterfeit chip.

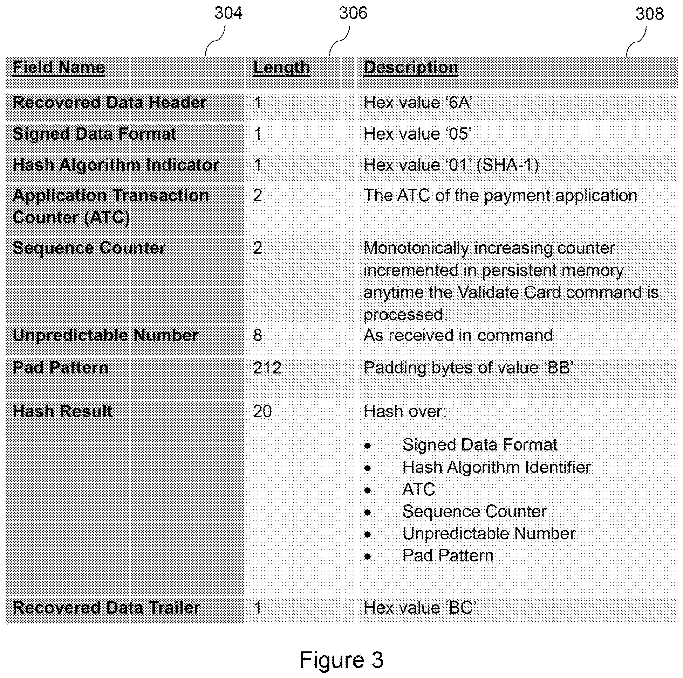

Figure 3 shows exemplary lengths and description of the data fields involved in the present disclosure. The data shown in Figure 3 are used by the payment card to compute the payment card cryptographic signature *[Sig_Card]. The* recovered data header and the recovered data trailer each have a length of 1. The recovered data header has a hexadecimal (hex) value of 6A. The recovered data trailer has a hex value of BC. Exemplary lengths and descriptions of the signed data format, hash algorithm identifier, application transaction counter (ATC), authentication sequence counter, and pad pattern, which make up the chip input data, are shown in Figure 3. The recovered data header and recovered data trailer are fixed values that define the format of the data block. These elements are used to maintain the expected format for the input data for the generation of the payment card cryptographic signature [*Sig_Card*] by the payment card 102, and the output of verification of the payment card cryptographic signature [*H_verify*]*.* If these bytes (recovered data header and recovered data trailer) are not present during signature verification, this is an indication that a problem has occurred, such as the corruption of the signature or use of incorrect public key.

For example, the signature generation and signature verification operations are performed by different entities, signature generation by the payment card 102 and signature verification by the terminal device 110, and the signature generated by the card [*Sig_Card*] could be corrupted on the way between the payment card 102 and terminal device 110. In this case, when the terminal device 110 attempts to verify the signature, the outcome [*H_verify*] will be completely different than expected, due to the cryptographic properties of signature generation and verification. The corruption is made evident by having the first and last bytes of the recovered data different from the expected fixed values for "Recovered Data Header" and "Recovered Data Trailer", respectively. In the event that the signature [*Sig_Card]* is corrupted, the chip cannot be authenticated. As another example, when the terminal device 110 uses the incorrect public key *[Pub_Card]* to verify the signature, the outcome of signature verification [*H_verify*] will be completely different than the expected, as this would be evident from "Recovered Data Header" and "Recovered Data Trailer" being different to the expected fixed values.

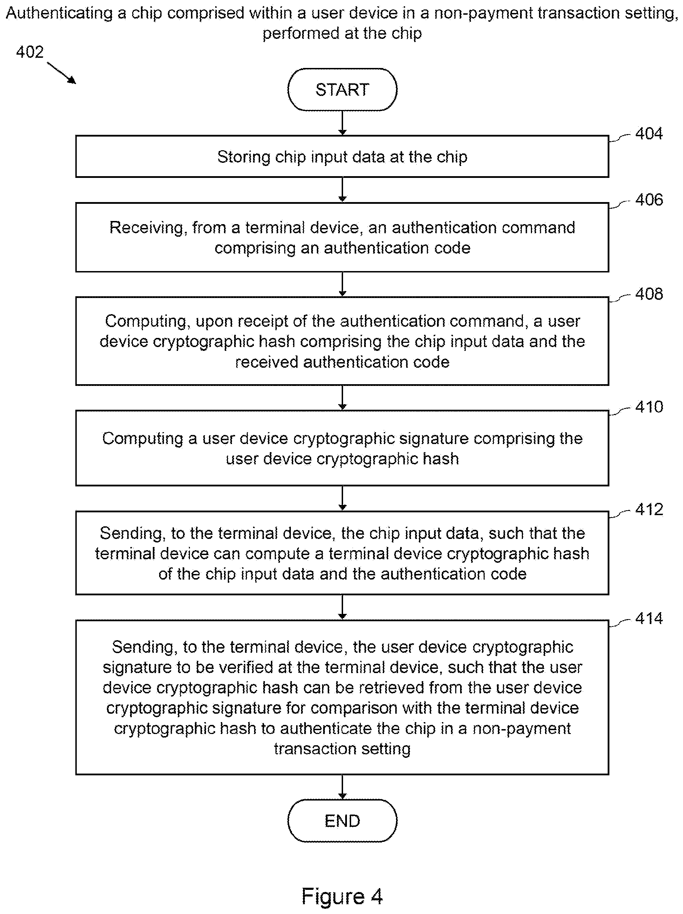

Figure 4 shows the steps of a computer-implemented method 402 for authenticating a chip comprised within a user device in a non-payment transaction setting, wherein the method is performed at the chip 108, in accordance with embodiments of the present disclosure. The method starts with the chip 108 of a user device, for example a payment card 102, storing, at Step 404, data at the chip 108. This data is to be used by the payment card 102 as chip input data to compute a hash function, as explained below. The chip 108 receives, at Step 406, an authentication command from a terminal device 110. The authentication command comprises an authentication code.

Upon receipt of the authentication command, the chip 108 computes, at Step 408, a user device cryptographic hash comprising the chip input data and the received authentication code. The chip 108 then computes, at Step 410, a user device cryptographic signature comprising the user device cryptographic hash.

Once the user device cryptographic signature has been computed, the chip 108 sends, at Step 412, the chip input data to the terminal device, such that the terminal device 110 can compute a terminal device cryptographic hash of the chip input data and the authentication code.

Next, the chip 108 sends, at Step 414, the user device cryptographic signature to be verified at the terminal device to the terminal device 110, such that the user device cryptographic hash can be retrieved from the user device cryptographic signature for comparison with the terminal device cryptographic hash to authenticate the chip in a non-payment transaction setting.

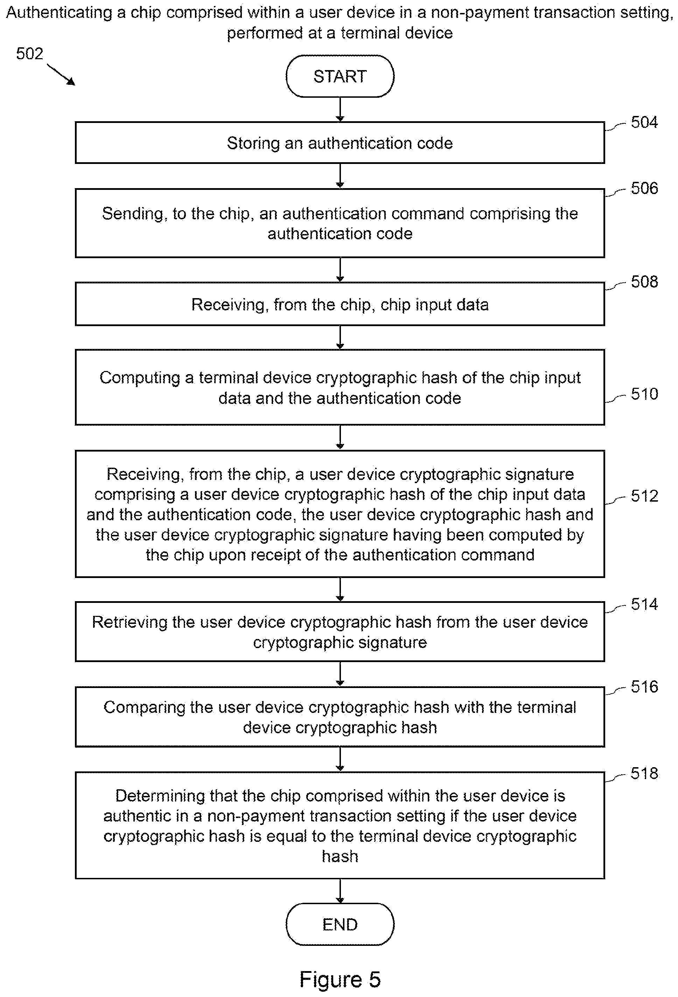

Figure 5 shows the steps of a computer-implemented method 502 for authenticating a chip comprised within a user device in a non-payment transaction setting, wherein the method is performed at a terminal device, in accordance with embodiments of the present disclosure. The method starts with the terminal device 110 storing, at Step 504, an authentication code. The terminal device sends, at Step 506, an authentication command comprising the authentication code to the chip 108 of the user device. The terminal device 110 then receives, at Step 508, chip input data from the chip 108.

Once the chip input data has been received by the terminal device 110, the terminal device 110 computes, at Step 510, a terminal device cryptographic hash of the chip input data and the authentication code. The terminal device 110 then receives, at Step 512, from the chip, a user device cryptographic signature comprising a user device cryptographic hash of the chip input data and the authentication code, the user device cryptographic hash and the user device cryptographic signature having been computed by the chip upon receipt of the authentication command.

The terminal device 110 retrieves, at Step 514, the user device cryptographic hash from the user device cryptographic signature. The terminal device 110 then compares the user device cryptographic hash with the terminal device cryptographic hash. The terminal device 110 determines, at Step 518, that the chip 108 comprised within the user device is authentic in a non-payment transaction setting if the user device cryptographic hash is equal to the terminal device cryptographic hash.

Figure 6 shows an exemplary standalone cryptographic infrastructure 602. The infrastructure comprises a card vendor 604, certification authority (payment system) 606, a payment card 608 and a payment terminal 610.

Embodiments of the present disclosure may be used to detect fraud in a non-payment transaction setting. Embodiments of the present disclosure enable detection of fraud by determining whether the chip is genuine, and a payment transaction need not be performed in order to detect fraud in accordance with the present disclosure. For example, the present disclosure can be used by authorities, such as law enforcement agencies, to assess chips in the event that the chip is suspected as being fraudulent. In contrast to existing verification methods, the authentication command of the present disclosure does not need to be part of a payment transaction and therefore can be performed even if a transaction is rejected or blocked by the payment card. The authentication command of the present disclosure allows any off-card entity, such as a terminal device, to verify the authenticity of the chip.

Many modifications may be made to the specific embodiments described above without departing from the scope of the invention as defined in the accompanying claims. Features of one embodiment may also be used in other embodiments, either as an addition to such embodiment or as a replacement thereof.

In the specific embodiments provided in the present disclosure, the payment card is used as a non-limiting example of a user device. The user device may be any computing device comprising a processor, a memory and communication capability. The user device may be a transaction device capable of performing a payment transaction. The payment card includes a chip enclosed within a payment card body. A chip enclosed within a payment card body is an example of card form factor. The card form factor may be a payment card form factor. The payment card form factor may be in accordance with ISO/IEC 7810 ID-1.

In the specific embodiments provided in the present disclosure, an EMV chip is used as a non-limiting example of a chip. Alternative settings for the chip may be used, for example the chip may be embedded in a non-financial or non-payment setting, such as within a SIM card or a smart card. It should be noted that in embodiments in which the chip is embedded in a non-payment setting, the data used to compute the chip signature may be modified. The chip input data for embodiments in a non-payment setting comprises an authentication sequence counter, as per embodiments of the present disclosure. The chip input data may further comprise: a signed data format; a hash algorithm identifier; and/or a pad pattern. In embodiments, alternative data elements may be used by applications in a non-payment setting, e.g. a SIM card or a smart card, instead of the ATC that are meaningful for such a setting.

It should be noted that embodiments of the disclosure may be implemented using a different type of user device. Alternative chip enclosures may be used; for example, instead of a card form factor, the user device may comprise a non-card form factor, such as a wristband, a smartwatch, a key fob or a tag. In all of these examples, user device comprises a chip enclosure which is capable of housing the chip. As such, the present disclosure can be implemented using card devices, such as a payment card, or non-card devices.

Furthermore, the present disclosure can be implemented using other card and non-card form factors which may not be payment transaction devices. For example, the present disclosure can be applied to an identity card or a travelcard, or to a non-card form factor such as a wristband, a smartwatch, a key fob or a tag, but excluding any payment transaction capability.

The terminal device may be any computing device comprising a processor, a memory and communication capability. The terminal device may include data and local communicative capabilities. For example, the terminal device may be a smartphone or tablet having some form of data connection, such as a Wi-Fi or Ethernet connection. The terminal device may be a card reader or other computing device in a non-payment transaction setting. The terminal device may be equipped with any local wireless telecommunications apparatus comprising a local transmitter/receiver for communication with a local transaction device, such as a payment card.

In the specific embodiments provided in the present disclosure, NFC technology is used as a non-limiting example of communication capability between the user device and the terminal device. Alternative forms of communication may be used, such as via barcodes and/or QR codes. The user device and the terminal device may interact with one another in a contactless or a contact-based manner.

In the specific embodiments provided in the present disclosure, public key cryptography is used as a non-limiting example by the user device to compute the user device cryptographic signature and by the terminal device to retrieve the user device cryptographic hash from the user device cryptographic signature. Instead of public key cryptography, secret key cryptography may be used. The user device cryptographic signature may be computed using a user device secret key, such that the terminal device can retrieve the user device cryptographic hash from the user device cryptographic signature using the user device secret key. In embodiments in which secret key cryptography is used, the payment card 102 still interfaces with the terminal device 110, but the terminal device 110 connects to a Web service to complete the verification of chip authenticity. The payment card vendor receives a master secret key from the payment system. The master secret key is used with card identifiers by the vendor to derive card specific keys, which are embedded in the payment cards, whilst the master secret key is stored securely at the payment system. The payment system operates a Web service that receives the same input as the terminal device 110 does in the public key cryptography embodiment, namely the payment card cryptographic signature [*Sig_Card],* the ATC and the authentication sequence counter. This Web service can be accessed via a computing device such as the terminal device 110, or any computer or mobile device via a computer browser using a defined API. When a signature is received for verification, the Web service derives the card specific key from the master secret key, verifies the signature, and outputs to the terminal device 110 whether the verification was successful or not. A law enforcement agency, or any other entity/organisation can therefore send the authentication command to the payment 102 card to obtain the signature, in order to verify the authenticity of a chip.

In the specific embodiments provided in the present disclosure, the terminal device cryptographic hash comprises the chip input data and the authentication code. The terminal device cryptographic hash may comprise further data, such as arbitrary data, e.g. a number string. The terminal device may send the arbitrary data to the chip for inclusion in the user device cryptographic signature generated by the chip. Upon receipt of the authentication command, the chip may compute a user device cryptographic signature comprising a user device cryptographic hash of the chip input data, the arbitrary data and the authentication code, and send this user device cryptographic signature to the terminal device. The terminal device may then retrieve the user device cryptographic hash from the user device cryptographic signature and compare the user device cryptographic hash with the terminal device cryptographic hash. The terminal device may determine that the chip comprised within the user device is authentic in a non-payment transaction setting if the user device cryptographic hash is equal to the terminal device cryptographic hash. Advantageously, this enables authentication of arbitrary data sent to the cardholder, which allows it to provide an extra authentication factor for the cardholder in certain use cases, e.g. during an online authentication process. Access control, or cardholder authentication, may be provided as part of this process to increase the security of the authentication process. The access control may include use of a PIN, passcode or biometric authentication.

## Claims

1. A computer-implemented method for authenticating a chip comprised within a user device in a non-payment transaction setting, wherein the method is performed at the chip, the method comprising:
storing (404) chip input data (118), wherein the chip input data (118) comprises an authentication sequence counter;
receiving (406), from a terminal device, an authentication command (116) comprising an authentication code, wherein the authentication code comprises an unpredictable number;
computing (408), upon receipt of the authentication command (116), a user device cryptographic hash comprising the chip input data (118) and the received authentication code;
computing (410) a user device cryptographic signature (120) comprising the user device cryptographic hash;
sending (412), to the terminal device, the chip input data (118), such that the terminal device can compute a terminal device cryptographic hash of the chip input data (118) and the authentication code; and
sending (414), to the terminal device, the user device cryptographic signature (120) to be verified at the terminal device, such that the user device cryptographic hash can be retrieved from the user device cryptographic signature (120) for comparison with the terminal device cryptographic hash to authenticate the chip in a non-payment transaction setting.

2. The computer-implemented method of Claim 1, wherein the user device cryptographic signature (120) is computed using a user device private key, such that the user device cryptographic hash can be retrieved from the user device cryptographic signature (120) using a user device public key.

3. The computer-implemented method of Claim 1, wherein the user device cryptographic signature (120) is computed using a user device secret key, such that the user device cryptographic hash can be retrieved from the user device cryptographic signature (120) using the user device secret key.

4. The computer-implemented method of Claim 2, wherein the user device public key is verified prior to computing the user device cryptographic signature (120).

5. The computer-implemented method of Claim 3, wherein the terminal device connects to an external Web service to perform verification of the user device cryptographic signature (120).

6. The computer-implemented method of any preceding claim, wherein the user device is a transaction device, and optionally wherein the transaction device comprises a card form factor, and optionally wherein the card form factor is a payment card form factor, and optionally wherein the payment card form factor is in accordance with ISO/IEC 7810 ID-1.

7. The computer-implemented method of Claim 1, wherein the chip input data (118) comprises: a signed data format, a hash algorithm identifier, an application transaction counter, and/or a pad pattern, and optionally wherein the method comprises incrementing the authentication sequence counter each time the authentication command is received.

8. A computer-implemented method for authenticating a chip comprised within a user device in a non-payment transaction setting, wherein the method is performed at a terminal device, the method comprising:
storing (504) an authentication code, wherein the authentication code comprises an unpredictable number;
sending (506), to the chip, an authentication command (116) comprising the authentication code;
receiving (508), from the chip, chip input data (118), wherein the chip input data (118) comprises an authentication sequence counter;
computing (510) a terminal device cryptographic hash of the chip input data (118) and the authentication code; and
receiving (512), from the chip, a user device cryptographic signature (120) comprising a user device cryptographic hash of the chip input data and the authentication code, the user device cryptographic hash and the user device cryptographic signature (120) having been computed by the chip upon receipt of the authentication command;
retrieving (514) the user device cryptographic hash from the user device cryptographic signature (120);
comparing (516) the user device cryptographic hash with the terminal device cryptographic hash;
determining (518) that the chip comprised within the user device is authentic in a non-payment transaction setting if the user device cryptographic hash is equal to the terminal device cryptographic hash.

9. The computer-implemented method of Claim 8, the method comprising:
computing a terminal device cryptographic hash of the chip input data, the authentication code and arbitrary data;
sending the arbitrary data to the chip for inclusion in the user device cryptographic signature generated by the chip;
receiving, from the chip, a user device cryptographic signature comprising a user device cryptographic hash of the chip input data, the arbitrary data and the authentication code, the user device cryptographic hash and the user device cryptographic signature having been computed by the chip upon receipt of the authentication command;
retrieving the user device cryptographic hash from the user device cryptographic signature;
comparing the user device cryptographic hash with the terminal device cryptographic hash;
determining that the chip comprised within the user device is authentic in a non-payment transaction setting if the user device cryptographic hash is equal to the terminal device cryptographic hash.

10. The computer-implemented method of Claim 8 or Claim 9, wherein the terminal device comprises a card reader in a non-payment transaction setting, or wherein the terminal device comprises a smartphone.

11. The computer-implemented method of any of Claims 8 to 10, wherein the user device and the terminal device interact in a contactless manner, and optionally wherein the user device and the terminal device interact via NFC technology.

12. A computing device comprising a processor, a memory, and communication capability, wherein the computing device is adapted to perform the method of any of Claims 1 to 7.

13. A computing device comprising a processor, a memory, and communication capability, wherein the computing device is adapted to perform the method of any of Claims 8 to 11.

14. A computer program product comprising instructions which, when the program is executed by a computer, cause the computer to carry out the method of any of Claims 1 to 7.

15. A computer program product comprising instructions which, when the program is executed by a computer, cause the computer to carry out the method of any of Claims 8 to 11.

## Patentansprüche

1. Computerimplementiertes Verfahren zum Authentifizieren eines in einem Benutzergerät enthaltenen Chips in einer Nicht-Zahlungstransaktionsumgebung, wobei das Verfahren an dem Chip durchgeführt wird und Folgendes beinhaltet:
Speichern (404) von Chip-Eingabedaten (118), wobei die Chip-Eingabedaten (118) einen Authentifizierungssequenzzähler umfassen;
Empfangen (406), von einem Endgerät, eines Authentifizierungsbefehls (116), der einen Authentifizierungscode umfasst, wobei der Authentifizierungscode eine unvorhersehbare Zahl umfasst;
Berechnen (408), nach Empfang des Authentifizierungsbefehls (116), eines kryptografischen Hash des Benutzergeräts, der die Chip-Eingabedaten (118) und den empfangenen Authentifizierungscode umfasst;
Berechnen (410) einer kryptografischen Signatur (120) des Benutzergeräts, die den kryptografischen Hash des Benutzergeräts umfasst;
Senden (412), zu dem Endgerät, der Chip-Eingabedaten (118), so dass das Endgerät einen kryptografischen Hash des Endgeräts der Chip-Eingabedaten (118) und des Authentifizierungscodes berechnen kann; und
Senden (414), zu dem Endgerät, der kryptografischen Signatur (120) des Benutzergeräts zur Verifizierung an dem Endgerät, so dass der kryptografische Hash des Benutzergeräts aus der kryptografischen Signatur (120) des Benutzergeräts abgerufen werden kann, um ihn mit dem kryptografischen Hash des Endgeräts zu vergleichen und den Chip in einer Nicht-Zahlungstransaktionsumgebung zu authentifizieren.

2. Computerimplementiertes Verfahren nach Anspruch 1, wobei die kryptografische Signatur (120) des Benutzergeräts unter Verwendung eines privaten Schlüssels des Benutzergeräts berechnet wird, so dass der kryptografische Hash des Benutzergeräts unter Verwendung eines öffentlichen Schlüssels des Benutzergeräts aus der kryptografischen Signatur (120) des Benutzergeräts abgerufen werden kann.

3. Computerimplementiertes Verfahren nach Anspruch 1, wobei die kryptografische Signatur (120) des Benutzergeräts unter Verwendung eines geheimen Schlüssels des Benutzergeräts berechnet wird, so dass der kryptografische Hash des Benutzergeräts unter Verwendung des geheimen Schlüssels des Benutzergeräts aus der kryptografischen Signatur (120) des Benutzergeräts abgerufen werden kann.

4. Computerimplementiertes Verfahren nach Anspruch 2, wobei der öffentliche Schlüssel des Benutzergeräts vor der Berechnung der kryptografischen Signatur (120) des Benutzergeräts verifiziert wird.

5. Computerimplementiertes Verfahren nach Anspruch 3, wobei das Endgerät eine Verbindung zu einem externen Webdienst herstellt, um die Verifizierung der kryptografischen Signatur (120) des Benutzergeräts durchzuführen.

6. Computerimplementiertes Verfahren nach einem vorherigen Anspruch, wobei das Benutzergerät ein Transaktionsgerät ist, und wobei optional das Transaktionsgerät einen Kartenformfaktor umfasst, und wobei optional der Kartenformfaktor ein Zahlungskartenformfaktor ist, und wobei optional der Zahlungskartenformfaktor ISO/IEC 7810 ID-1 entspricht.

7. Computerimplementiertes Verfahren nach Anspruch 1, wobei die Chip-Eingabedaten (118) Folgendes umfassen: ein signiertes Datenformat, eine Hash-Algorithmus-Kennung, einen Anwendungstransaktionszähler und/oder ein Pad-Muster, und wobei das Verfahren optional das Inkrementieren des Authentifizierungssequenzzählers bei jedem Empfang des Authentifizierungsbefehls beinhaltet.

8. Computerimplementiertes Verfahren zum Authentifizieren eines in einem Benutzergerät enthaltenen Chips in einer Nicht-Zahlungstransaktionsumgebung, wobei das Verfahren an einem Endgerät durchgeführt wird und Folgendes beinhaltet:
Speichern (504) eines Authentifizierungscodes, wobei der Authentifizierungscode eine unvorhersehbare Zahl umfasst;
Senden (506), zu dem Chip, eines Authentifizierungsbefehls (116), der den Authentifizierungscode umfasst;
Empfangen (508), von dem Chip, von Chip-Eingabedaten (118), wobei die Chip-Eingabedaten (118) einen Authentifizierungssequenzzähler umfassen;
Berechnen (510) eines kryptografischen Hash der Chip-Eingabedaten (118) des Endgeräts und des Authentifizierungscodes; und
Empfangen (512), von dem Chip, einer kryptografischen Signatur (120) des Benutzergeräts, die einen kryptografischen Hash des Benutzergeräts der Chip-Eingabedaten und des Authentifizierungscodes umfasst, wobei der kryptografische Hash des Benutzergeräts und die kryptografische Signatur (120) des Benutzergeräts vom Chip nach Empfang des Authentifizierungsbefehls berechnet wurden;
Abrufen (514) des kryptografischen Hash des Benutzergeräts aus der kryptografischen Signatur (120) des Benutzergeräts;
Vergleichen (516) des kryptografischen Hash des Benutzergeräts mit dem kryptografischen Hash des Endgeräts;
Feststellen (518), dass der im Benutzergerät enthaltene Chip in einer Nicht-Zahlungstransaktionsumgebung authentisch ist, wenn der kryptografische Hash des Benutzergeräts mit dem kryptografischen Hash des Endgeräts übereinstimmt.

9. Computerimplementiertes Verfahren nach Anspruch 8, wobei das Verfahren Folgendes beinhaltet:
Berechnen eines kryptografischen Hash des Endgeräts aus den Chip-Eingabedaten, dem Authentifizierungscode und arbiträren Daten;
Senden der arbiträren Daten zu dem Chip zur Aufnahme in die vom Chip erzeugte kryptografische Signatur des Benutzergeräts;
Empfangen, von dem Chip, einer kryptografischen Signatur des Benutzergeräts, die einen kryptografischen Hash des Benutzergeräts der Chip-Eingabedaten, der arbiträren Daten und des Authentifizierungscodes umfasst, wobei der kryptografische Hash des Benutzergeräts und die kryptografische Signatur des Benutzergeräts vom Chip nach Empfang des Authentifizierungsbefehls berechnet wurden;
Abrufen des kryptografischen Hash des Benutzergeräts aus der kryptografischen Signatur des Benutzergeräts;
Vergleichen des kryptografischen Hash des Benutzergeräts mit dem kryptografischen Hash des Endgeräts;
Feststellen, dass der in dem Benutzergerät enthaltene Chip in einer Nicht-Zahlungstransaktionsumgebung authentisch ist, wenn der kryptografische Hash des Benutzergeräts mit dem kryptografischen Hash des Endgeräts übereinstimmt.

10. Computerimplementiertes Verfahren nach Anspruch 8 oder Anspruch 9, wobei das Endgerät in einer Nicht-Zahlungstransaktionsumgebung einen Kartenleser umfasst oder wobei das Endgerät ein Smartphone umfasst.

11. Computerimplementiertes Verfahren nach einem der Ansprüche 8 bis 10, wobei das Benutzergerät und das Endgerät kontaktlos interagieren und wobei das Benutzergerät und das Endgerät optional über NFC-Technologie interagieren.

12. Rechengerät, das einen Prozessor, einen Speicher und Kommunikationsfähigkeit umfasst, wobei das Rechengerät zum Durchführen des Verfahrens nach einem der Ansprüche 1 bis 7 ausgelegt ist.

13. Rechengerät mit einem Prozessor, einem Speicher und Kommunikationsfähigkeit, wobei das Rechengerät zum Durchführen des Verfahrens nach einem der Ansprüche 8 bis 11 ausgelegt ist.

14. Computerprogrammprodukt, das Befehle umfasst, die bei Ausführung des Programms durch einen Computer den Computer zum Durchführen des Verfahrens nach einem der Ansprüche 1 bis 7 veranlassen.

15. Computerprogrammprodukt, das Befehle umfasst, die bei Ausführung des Programms durch einen Computer den Computer zum Durchführen des Verfahrens nach einem der Ansprüche 8 bis 11 veranlassen.

## Revendications

1. Procédé mis en œuvre par ordinateur destiné à authentifier une puce comprise au sein d'un dispositif utilisateur dans une installation de transaction sans paiement, dans lequel le procédé est réalisé au niveau de la puce, le procédé comprenant :
le stockage (404) de données d'entrée de puce (118), dans lequel les données d'entrée de puce (118) comprennent un compteur de séquences d'authentification ;
la réception (406), à partir d'un dispositif terminal, d'un ordre d'authentification (116) comprenant un code d'authentification, dans lequel le code d'authentification comprend un nombre non prévisible ;
le calcul informatique (408), à la réception de l'ordre d'authentification (116), d'un hachage cryptographique de dispositif utilisateur comprenant les données d'entrée de puce (118) et le code d'authentification reçu ;
le calcul informatique (410) d'une signature cryptographique de dispositif utilisateur (120) comprenant le hachage cryptographique de dispositif utilisateur ;
l'envoi (412), au dispositif terminal, des données d'entrée de puce (118), de sorte que le dispositif terminal peut calculer informatiquement un hachage cryptographique de dispositif terminal des données d'entrée de puce (118) et du code d'authentification ; et
l'envoi (414), au dispositif terminal, de la signature cryptographique de dispositif utilisateur (120) à vérifier au niveau du dispositif terminal, de sorte que le hachage cryptographique de dispositif utilisateur peut être extrait de la signature cryptographique de dispositif utilisateur (120) pour une comparaison avec le hachage cryptographique de dispositif terminal afin d'authentifier la puce dans une installation de transaction sans paiement.

2. Procédé mis en œuvre par ordinateur selon la revendication 1, dans lequel la signature cryptographique de dispositif utilisateur (120) est calculée informatiquement à l'aide d'une clé privée de dispositif utilisateur, de sorte que le hachage cryptographique de dispositif utilisateur peut être extrait de la signature cryptographique de dispositif utilisateur (120) à l'aide d'une clé publique de dispositif utilisateur.

3. Procédé mis en œuvre par ordinateur selon la revendication 1, dans lequel la signature cryptographique de dispositif utilisateur (120) est calculée informatiquement à l'aide d'une clé secrète de dispositif utilisateur, de sorte que le hachage cryptographique de dispositif utilisateur peut être extrait de la signature cryptographique de dispositif utilisateur (120) à l'aide de la clé secrète de dispositif utilisateur.

4. Procédé mis en œuvre par ordinateur selon la revendication 2, dans lequel la clé publique de dispositif utilisateur est vérifiée avant le calcul informatique de la signature cryptographique de dispositif utilisateur (120).

5. Procédé mis en œuvre par ordinateur selon la revendication 3, dans lequel le dispositif terminal se connecte à un service Web externe pour réaliser la vérification de la signature cryptographique de dispositif utilisateur (120).

6. Procédé mis en œuvre par ordinateur selon l'une quelconque des revendications précédentes, dans lequel le dispositif utilisateur est un dispositif de transaction, et éventuellement dans lequel le dispositif de transaction comprend un facteur de forme de carte, et éventuellement dans lequel le facteur de forme de carte est un facteur de forme de carte de paiement, et éventuellement dans lequel le facteur de forme de carte de paiement est conforme à la norme ISO/IEC 7810 ID-1.

7. Procédé mis en œuvre par ordinateur selon la revendication 1, dans lequel les données d'entrée de puce (118) comprennent : un format de données signées, un identifiant d'algorithme de hachage, un compteur de transactions d'application, et/ou un motif de remplissage, et éventuellement dans lequel le procédé comprend l'incrémentation du compteur de séquences d'authentification chaque fois que l'ordre d'authentification est reçu.

8. Procédé mis en œuvre par ordinateur destiné à authentifier une puce comprise au sein d'un dispositif utilisateur dans une installation de transaction sans paiement, dans lequel le procédé est réalisé au niveau d'un dispositif terminal, le procédé comprenant :
le stockage (504) d'un code d'authentification, dans lequel le code d'authentification comprend un nombre non prévisible ;
l'envoi (506), à la puce, d'un ordre d'authentification (116) comprenant le code d'authentification ;
la réception (508), à partir de la puce, de données d'entrée de puce (118), dans lequel les données d'entrée de puce (118) comprennent un compteur de séquences d'authentification ;
le calcul informatique (510) d'un hachage cryptographique de dispositif terminal des données d'entrée de puce (118) et du code d'authentification ; et
la réception (512), à partir de la puce, d'une signature cryptographique de dispositif utilisateur (120) comprenant un hachage cryptographique de dispositif utilisateur des données d'entrée de puce et du code d'authentification, le hachage cryptographique de dispositif utilisateur et la signature cryptographique de dispositif utilisateur (120) ayant été calculés informatiquement par la puce à la réception de l'ordre d'authentification ;
l'extraction (514) du hachage cryptographique de dispositif utilisateur à partir de la signature cryptographique de dispositif utilisateur (120) ;
la comparaison (516) du hachage cryptographique de dispositif utilisateur avec le hachage cryptographique de dispositif terminal ;
la détermination (518) du fait que la puce comprise au sein du dispositif utilisateur est authentique dans une installation de transaction sans paiement si le hachage cryptographique de dispositif utilisateur est égal au hachage cryptographique de dispositif terminal.

9. Procédé mis en œuvre par ordinateur selon la revendication 8, le procédé comprenant :
le calcul informatique d'un hachage cryptographique de dispositif terminal des données d'entrée de puce, du code d'authentification et de données arbitraires ;
l'envoi des données arbitraires à la puce pour une inclusion dans la signature cryptographique de dispositif utilisateur générée par la puce ;
la réception, à partir de la puce, d'une signature cryptographique de dispositif utilisateur comprenant un hachage cryptographique de dispositif utilisateur des données d'entrée de puce, des données arbitraires et du code d'authentification, le hachage cryptographique de dispositif utilisateur et la signature cryptographique de dispositif utilisateur ayant été calculés informatiquement par la puce à la réception de l'ordre d'authentification ;
l'extraction du hachage cryptographique de dispositif utilisateur à partir de la signature cryptographique de dispositif utilisateur ;
la comparaison du hachage cryptographique de dispositif utilisateur avec le hachage cryptographique de dispositif terminal ;
la détermination du fait que la puce comprise au sein du dispositif utilisateur est authentique dans une installation de transaction sans paiement si le hachage cryptographique de dispositif utilisateur est égal au hachage cryptographique de dispositif terminal.

10. Procédé mis en œuvre par ordinateur selon la revendication 8 ou la revendication 9, dans lequel le dispositif terminal comprend un lecteur de carte dans une installation de transaction sans paiement, ou dans lequel le dispositif terminal comprend un téléphone intelligent.

11. Procédé mis en œuvre par ordinateur selon l'une quelconque des revendications 8 à 10, dans lequel le dispositif utilisateur et le dispositif terminal interagissent de manière sans contact, et éventuellement dans lequel le dispositif utilisateur et le dispositif terminal interagissent par l'intermédiaire de la technologie NFC.

12. Dispositif informatique comprenant un processeur, une mémoire, et une capacité de communication, dans lequel le dispositif informatique est adapté pour réaliser le procédé de l'une quelconque des revendications 1 à 7.

13. Dispositif informatique comprenant un processeur, une mémoire, et une capacité de communication, dans lequel le dispositif informatique est adapté pour réaliser le procédé de l'une quelconque des revendications 8 à 11.

14. Produit-programme informatique comprenant des instructions qui, lorsque le programme est exécuté par un ordinateur, amènent l'ordinateur à effectuer le procédé de l'une quelconque des revendications 1 à 7.

15. Produit-programme informatique comprenant des instructions qui, lorsque le programme est exécuté par un ordinateur, amènent l'ordinateur à effectuer le procédé de l'une quelconque des revendications 8 à 11.
